# EUROPEAN PATENT APPLICATION

(11) **EP 3 309 631 A1**
(43) Date of publication of application: **18.04.2018**
(21) Application number: 16807267.6
(22) Date of filing: 19.05.2016
(51) Int. Cl.: G05B 11/36, F01P 7/16

(54) **FLOW-RATE CONTROL DEVICE AND FLOW-RATE CONTROL METHOD**

(30) Priority: 11.06.2015 JP 2015118440
(71) Applicant: Mikuni Corporation, Tokyo 101-0021 (JP)
(72) Inventor: YOKOYAMA Munekazu, Odawara-shi Kanagawa 250-0055 (JP)
(74) Representative: Becker Kurig Straus
(86) International application number: PCT/JP2016/064881
(87) International publication number: WO 2016/199560

(57) **Abstract**

Provided is a flow-rate control device that controls a flow rate of a coolant, which cools an internal combustion engine, on the basis of a control deviation between a measured temperature, which is a measured temperature of the internal combustion engine, and a target temperature requested by a host device. The flow-rate control device includes: a first determination part that determines whether or not a load amount of the internal combustion engine is in a high-load state, i.e. is greater than or equal to a predetermined first threshold; a second determination part that determines whether or not a target temperature reaches a high-load temperature that is a target temperature requested when the internal combustion engine is in a high-load state; and a first correction part that lowers the target temperature at a first drop rate that is predetermined when the first determination part determines that the internal combustion engine is in the high-load state, and sets the target temperature to the high-load temperature when the second determination part determines that the target temperature reaches the high-load temperature.

## Description

### [Technical Field]

The present invention relates to a flow-rate control device and method that control a flow rate of a fluid concerning temperature control.

### [Background Art]

Conventionally, for the purpose of controlling a temperature of an engine such as an internal combustion engine or the like, a technique for controlling a flow rate of a coolant for cooling the engine is known. The coolant is cooled as it passes through a main path that passes through a radiator for cooling the coolant or a bypass path that does not pass through the radiator, circulates through a water jacket provided around the engine, and passes through the main path, which results in lowering a temperature of the engine. In addition, the flow rate of the coolant toward the main path or the bypass path is adjusted by a valve, and thereby the engine temperature is controlled. In this cooling system of the engine, the flow rate of the coolant that is to flow into the main path or the bypass path is decided as a target flow rate on the basis of a difference between a target temperature of the engine and a measured temperature of the engine. The valve for adjusting the flow rate of the coolant is controlled on the basis of this target flow rate.

In this cooling system of the engine, for the purpose of improving controllability of the engine temperature in a situation in which a state of the engine varies, a feedback flow rate is calculated by feedback control based on a control deviation between the measured temperature of the engine and the target temperature of the engine, a feedforward flow rate is calculated on the basis of an engine speed, a manifold pressure, and a radiator temperature, the feedback flow rate is corrected on the basis of this feedforward flow rate, and thereby the target flow rate is calculated. This technique is well known (for example, see Patent Literature 1).

### [Citation List]

### [Patent Literature]

[Patent Literature 1]
Japanese Unexamined Patent Application Publication No. 2014-169661

### [Summary of Invention]

### [Technical Problem]

In recent years, to improve fuel efficiency of the engine, a coolant temperature in a water jacket when the engine is in a steady state rises to about 100°C, and thereby it is generally accepted that the flow rate of the coolant is controlled such that an amount of consumed fuel and an amount of exhaust after warmup are reduced. However, for example, when high-load output such as high-speed running of a steep uphill road is required for the engine, it may be preferred to lower the coolant temperature. The reasons for that may include prevention of a rise in engine output due to an improvement in volume efficiency, prevention of a sudden rise in engine temperature when returning from a high-load state, and so on. When such an engine is in a high-load state, the coolant temperature in the water jacket needs to be lowered to about 80°C. When the engine is switched between the steady state and the high-load state, it is necessary to sharply change the coolant temperature as much as about 20°C.

However, according to the aforementioned technique, when the engine is switched from the steady state to the high-load state, a response time is delayed and undershoot occurs. When the engine is switched from the high-load state to the steady state, there is a problem that overshoot occurs. That is, with respect to the need to sharply change the coolant temperature, there is a problem that the controllability is not sufficient.

The present invention was made to solve the above problems, and is directed to providing a flow-rate control device and method capable of improving controllability in accordance with a request to sharply change a coolant temperature.

### [Solution to Problem]

To solve the above problems, an aspect of the present invention is a flow-rate control device that controls a flow rate of a coolant, which cools an internal combustion engine, on the basis of a control deviation between a measured temperature, which is a measured temperature of the internal combustion engine, and a target temperature requested by a host device, and includes: a first determination part configured to determine whether or not a load amount of the internal combustion engine is in a high-load state that is greater than or equal to a predetermined first threshold; a second determination part configured to determine whether or not the target temperature reaches a high-load temperature that is a target temperature requested when the internal combustion engine is in the high-load state; and a first correction part configured to lower the target temperature at a first drop rate that is predetermined when the first determination part determines that the internal combustion engine is in the high-load state, and to set the target temperature to the high-load temperature when the second determination part determines that the target temperature reaches the high-load temperature.

### [Advantageous Effects of Invention]

According to the present invention, controllability in accordance with a request to sharply change a coolant temperature can be improved.

### [Brief Description of Drawings]

Fig. 1 is a diagram illustrating an engine cooling system according to the present embodiment.
Fig. 2 is a diagram illustrating a hardware configuration of an ECU.
Fig. 3 is a diagram illustrating a functional configuration of a flow-rate control device.
Fig. 4 is a flow chart illustrating a target temperature correction processing operation.
Fig. 5 is a schematic diagram illustrating a target temperature corrected by the target temperature correction processing.
Fig. 6 is a flow chart illustrating a selection processing operation.

### [Description of Embodiments]

Hereinafter, embodiments of the present invention will be described with reference to the drawings.

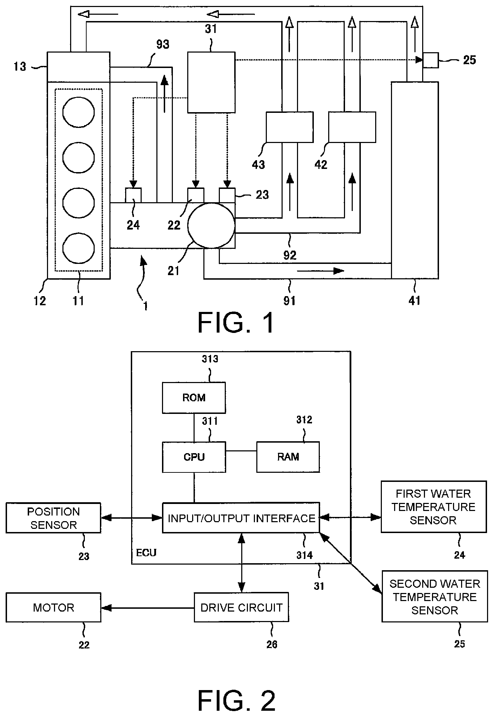

First, an engine cooling system according to the present embodiment will be described. Fig. 1 is a diagram illustrating an engine cooling system according to the present embodiment.

As illustrated in Fig. 1, an engine cooling system 1 according to the present embodiment includes an engine 11, a water jacket 12, a water pump 13, a coolant valve 21, a motor 22, a position sensor 23, a first water temperature sensor 24, a second water temperature sensor 25, an engine control unit (ECU) 31, a radiator 41, a heater 42, a throttle 43, a main flow path pipe 91, a sub-flow path pipe 92, and a bypass flow path pipe 93.

The engine cooling system 1 circulates a coolant via the main flow path pipe 91, the sub-flow path pipe 92, or the bypass flow path pipe 93, and controls a temperature of the engine 11 by means of the water jacket 12.

The engine 11 is an internal combustion engine of a vehicle such as an automobile. The water jacket 12 is provided around the engine 11, and cools the engine 11 with a coolant therein. The main flow path pipe 91 causes the coolant to flow into the radiator 41. The sub-flow path pipe 92 causes the coolant to flow into the heater 42 and the throttle 43. The bypass flow path pipe 93 causes the coolant flowing out of the water jacket 12 to flow into the water pump 13. The coolant flowing into the radiator 41, the heater 42, and the throttle 43 flows into the water pump 13. The water pump 13 causes the coolant to flow into the water jacket 12. The radiator 41 cools the coolant. The heater 42 warms up an interior of the vehicle. The throttle 43 controls an inflow amount of intake air into the engine 11.

The coolant valve 21 is a rotary type valve, is provided with an opening in a part of an outer circumferential surface thereof, and causes the coolant to flow into the main flow path pipe 91 and the sub-flow path pipe 92 according to an opening degree thereof. The motor 22 is a DC motor and is an actuator for driving the coolant valve 21. The position sensor 23 detects a position of the coolant valve 21 in a circumferential direction of the coolant valve 21, and detects the opening degree of the coolant valve 21 with respect to the main flow path pipe 91 and the sub-flow path pipe 92. The first water temperature sensor 24 is installed near an outlet of the water jacket 12, and detects a temperature of the coolant flowing out of the water jacket 12 as an engine temperature. The second temperature sensor 25 is installed near an outlet of the radiator 41, and detects a temperature of the coolant flowing out of the radiator 41 as a radiator temperature. The ECU 31 includes a processor and a memory, is a micro controller for controlling various motions concerning the engine 11, and operates a motion of the motor 22 on the basis of the engine temperature detected by the first water temperature sensor 24, the radiator temperature detected by the second water temperature sensor 25, and the position of the coolant valve 21 which is detected by the position sensor 23 in the present embodiment.

With the configuration described above, the coolant is cooled by the radiator 41 when circulating via the main flow path pipe 91, and circulates without being cooled when passing through the bypass flow path pipe 93. The engine cooling system 1 switches circulation paths of the coolant according to the opening degree of the coolant valve 21, or controls the inflow amount of the coolant into the main flow path pipe 91, thereby controlling the temperature of the engine 11.

Next, a hardware configuration of the ECU will be described. Fig. 2 is a diagram illustrating the hardware configuration of the ECU.

As illustrated in Fig. 2, the ECU 31 includes a central processing unit (CPU) 311, a RAM 312, a ROM 313, and an input/output interface 314. The CPU 311 and the RAM 312 cooperate to perform processing concerning the control of the coolant valve 21. The ROM 313 is a non-volatile memory in which a radiator temperature table and a lookup table, which will be described below, are stored. The input/output interface 314 is an interface for input/output of the CPU 311. The CPU 311 obtains results detected by the position sensor 23, the first water temperature sensor 24, and the second water temperature sensor 25 via the input/output interface 314, and outputs a signal according to an amount of operation of the motor 22 to a drive circuit 26 via the input/output interface 314, The drive circuit 26 is a pulse width modulation (PWM) circuit that performs PWM control on the motor 22, and changes a duty cycle of a pulse width depending on a magnitude of an input signal to drive the motor 22.

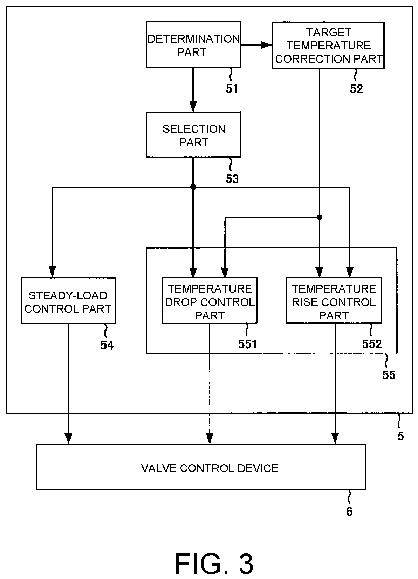

Next, a functional configuration of a flow-rate control device will be described. Fig. 3 is a diagram illustrating a functional configuration of a flow-rate control device.

As illustrated in Fig. 3, a flow-rate control device 5 includes a determination part 51, a target temperature correction part 52, a selection part 53, a steady-load control part 54, and a high-load control part 55 as functions. The steady-load control part 54 and the high-load control part 55 output a target flow rate that is a desired flow rate to the valve control device 6. The valve control device 6 controls the opening degree of the coolant valve 21 on the basis of the target flow rate and the engine temperature. The high-load control part 55 includes a temperature drop control part 551 and a temperature rise control part 552. These functions are adapted to be realized by the aforementioned CPU 311 and RAM 312 in cooperation. That is, in the present embodiment, the ECU 31 functions as the flow-rate control device 5 and the valve control device 6. A target temperature required by a host device (not shown), an engine speed and a manifold pressure which the ECU 31t can acquire as parameters of the engine, an engine temperature detected by the first temperature sensor 24, and a radiator temperature detected by the second temperature sensor 25 are adapted to be input to the flow-rate control device 5.

The determination part 51 performs determination of the engine temperature, and determination of the engine load obtained on the basis of the engine speed and the manifold pressure. Here, the engine load may be obtained on the basis of any of the parameters. The target temperature correction part 52 corrects the target temperature input to the flow-rate control device 5 on the basis of the determination performed by the determination part 51. The selection part 53 selects any one of the steady-load control part 54, the temperature drop control part 551, and the temperature rise control part 552 as a control part for controlling the target flow on the basis of a result of the determination performed by the determination part 51.

All of the steady-load control part 54, the temperature drop control part 551, and the temperature rise control part 552 calculate a feedback flow rate according to a deviation between the target temperature and the engine temperature and gain scheduling based on the radiator temperature, calculate a feedforward flow rate on the basis of the manifold pressure, the engine speed, and the radiator temperature, and output a flow rate obtained by correcting the feedback flow rate with the feedforward flow rate to the valve control device 6 as the target flow rate. Here, with respect to the calculation of the feedback flow rate, the steady-load control part 54 uses the target temperature that is input to the flow-rate control device 5, whereas the temperature drop control part 551 and the temperature rise control part 552 use the target temperature that is corrected by the target temperature correction part 52. The steady-load control part 54, the temperature drop control part 551, and the temperature rise control part 552 have different control rules from one another. In the present embodiment, gains used in the temperature drop control part 551 and the temperature rise control part 552 are set to be greater than that used in the steady-load control part 54. Here, the expression "the control rules are different from one another" means that at least any one of a method for calculating the target flow rate, parameters based on the calculation, and coefficients concerning the calculation are different.

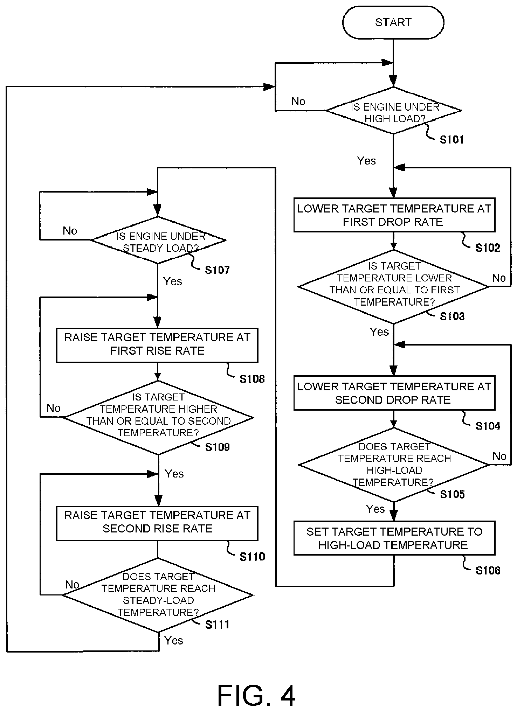

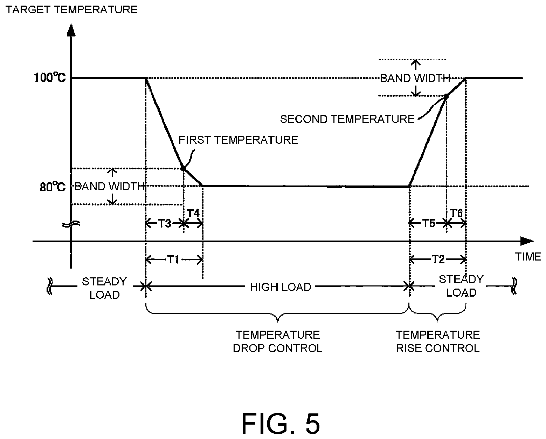

Next, a target temperature correction processing operation carried out by the determination part and the target temperature correction part will be described. Fig. 4 is a flow chart illustrating a target temperature correction processing operation. Fig. 5 is a schematic diagram illustrating a target temperature corrected by the target temperature correction processing.

As illustrated in Fig. 4, first, the determination part 51 determines whether or not the engine is in a high-load state (S101). Here, when an engine load amount calculated on the basis of the engine speed and the manifold pressure is higher than or equal to a predetermined first threshold, the determination part 51 determines that the engine is under a high load.

When the engine is in a high-load state (S101, YES), the target temperature correction part 52 lowers a steady temperature that is a target temperature when the engine is in a steady state at a first drop rate that is predetermined (S102). Here, the first drop rate indicates a rate of a lowered temperature per predetermined time over time.

Next, the determination part 51 determines whether or not the target temperature lowered at the first drop rate is lower than or equal to a first temperature (S103). Here, as illustrated in Fig. 5, the first temperature is set to a temperature that is present at an upper limit of a band width of the high-load temperature that is the target temperature required when the engine is in a high-load state.

When the target temperature lowered at the first drop rate is lower than or equal to the first temperature (S103, YES), the target temperature correction part 52 lowers the target temperature at a predetermined second drop rate (S104). Here, the second drop rate is adapted to be set to be smaller than the first drop rate. Next, the determination part 51 determines whether or not the target temperature lowered at the second drop rate reaches the high-load temperature (S105).

When the target temperature lowered at the second drop rate reaches the high-load temperature (S105, YES), the target temperature correction part 52 sets the target temperature to the high-load temperature (S106).

Next, the determination part 51 determines whether or not the engine is in a steady-load state (S107). Here, when the engine load amount is less than a predetermined second threshold, the determination part 51 determines that the engine is under a high load, and the second threshold is set to a value that is smaller than the first threshold.

When the engine is in a steady-load state (S107, YES), the target temperature correction part 52 raises the target temperature at a first rise rate that is predetermined (S108). Here, the first rise rate indicates a rate of a raised temperature per predetermined time.

Next, the determination part 51 determines whether or not the target temperature raised at the first rise rate is higher than or equal to the second temperature (S109). Here, as illustrated in Fig. 5, the second temperature is set to a temperature that is present at a lower limit of a band width of the steady temperature.

When the target temperature raised at the first rise rate is higher than or equal to the second temperature (S109, YES), the target temperature correction part 52 raises the target temperature at a predetermined second rise rate (S110). Here, the second rise rate is adapted to be set to be smaller than the first rise rate. Next, the determination part 51 determines whether or not the target temperature raised at a second rise rate reaches the steady temperature (S111).

When the target temperature raised at the second rise rate reaches the steady temperature (S111, YES), the determination part 51 determines whether or not the engine is in a high-load state again (S101).

Meanwhile, when the target temperature raised at the second rise rate does not reach the steady temperature (S111, NO), the target temperature correction part 52 raises the target temperature at a predetermined second rise rate again (S110).

In the determination of step S109, when the target temperature raised at the first rise rate is not higher than or equal to the second temperature (S109, NO), the target temperature correction part 52 raises the target temperature at a first rise rate that is predetermined again (S108).

In the determination of step S107, when the engine is not in a steady-load state (S107, NO), the determination part 51 determines again whether or not the engine is in a steady-load state (S107).

In the determination of step S105, when the target temperature lowered at the second drop rate does not reach the high-load temperature (S105, NO), the target temperature correction part 52 lowers the target temperature at a predetermined second drop rate again (S104).

In the determination of step S103, when the target temperature lowered at the first drop rate is not lower than or equal to the first temperature (S103, NO), the target temperature correction part 52 lowers the target temperature at a first drop rate that is predetermined again (S102).

In the determination of step S101, when the engine is not in a high-load state (S101, NO), the determination part 51 determines again whether or not the engine is in a high-load state (S101).

According to this target temperature correction processing, as illustrated in Fig. 5, since the target temperature is corrected such that the engine varies from the steady-load state to the high-load state and then varies from the steady temperature to the high-load temperature for time T1 and such that the engine varies from the high-load state to the steady-load state and then varies from the high-load temperature to the steady temperature for time T2, undershoot and overshoot are reduced. During time T1, the target temperature is lowered at a relatively great first drop rate for time T3 and then is lowered at a relatively small second drop rate for time T4. Thus, the undershoot can be reduced while shortening a response time to a request to set the target temperature to the high-load temperature. During time T2, the target temperature is raised at a relatively great first rise rate for time T5 and then is raised at a relatively small second rise rate for time T6. Thus, the overshoot can be reduced while shortening a response time to a request to set the target temperature to the steady temperature.

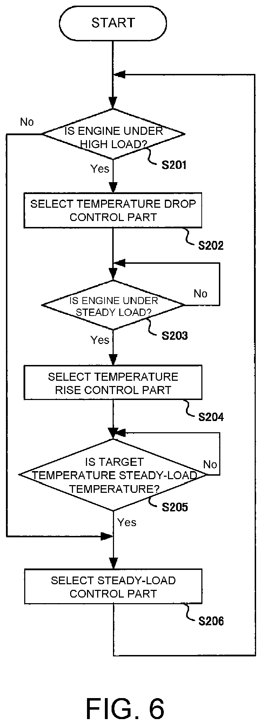

Next, a selection processing operation performed by the determination part and the selection part will be described. Fig. 6 is a flow chart illustrating a selection processing operation.

As illustrated in Fig. 6, first, the determination part 51 determines whether or not the engine is in a high-load state (S201).

When the engine is in a high-load state (S201, YES), the selection part 53 selects the temperature drop control part 551 (S202), and the determination part 51 determines whether or not the engine is in a steady-load state (S203).

When the engine is in a steady-load state (S203, YES), the selection part 53 selects the temperature rise control part 552 (S204), and the determination part 51 determines whether or not the target temperature is a steady-load temperature (S205).

When the target temperature is the steady-load temperature (S205, YES), the selection part 53 selects the steady-load control part 54 (S206), and the determination part 51 determines again whether or not the engine is in a high-load state (S201).

On the other hand, when the target temperature is not the steady-load temperature (S205, NO), the determination part 51 determines again whether or not the target temperature is the steady-load temperature (S205).

In the determination of step S203, when the engine is not in a steady-load state (S203, NO), the determination part 51 determines again whether or not the engine is in a steady-load state (S203).

In the determination of step S201, when the engine is not in a high-load state (S201, NO), the selection part 53 selects the steady-load control part 54 (S206).

According to this selection processing, as illustrated in Fig. 5, while the engine is in a high-load state, the flow rate is controlled by the temperature drop control of the temperature drop control part. The flow rate is controlled by the temperature rise control of the temperature rise control part until the engine varies from the high-load state to the steady-load state and the target temperature becomes the steady-load temperature. The temperature drop control can lower the engine temperature to the high-load temperature in a relatively short time, and deal with an increasing quantity of heat after lowering the engine temperature to the high-load temperature. After the engine varies from the high-load state to the steady-load state, heat accumulated in an engine block is delayed and discharged. Thus, a situation when the engine temperature is set to the steady-load temperature from the high-load temperature is different from a situation when the engine temperature is set to the high-load temperature from the steady-load temperature, but the temperature rise control can properly deal with the difference between the situations by making the control rules thereof different from those of the temperature drop control. Selecting the control part for controlling the flow rate refers to selecting the flow rate output by any one of the control parts as the flow rate output to the valve control device.

The present invention can be carried out in various ways without departing from the spirit or the principal features thereof. For this reason, the above embodiment is no more than a simple illustrative example in every respect, and is not interpreted to be limited. The scope of the present invention is defined by the claims, and is not at all restricted to the body of the specification. Further, all variations, various improvements, substitutions and modifications falling within the range equivalent to the claims are within the scope of the present invention.

### [Reference Signs List]

- 5: flow-rate control device
- 11: engine
- 51: determination part
- 52: target temperature correction part
- 53: selection part
- 54: steady-load control part
- 55: high-load control part
- 551: temperature drop control part
- 552: temperature rise control part

## Claims

1. A flow-rate control device that controls a flow rate of a coolant, which cools an internal combustion engine, on the basis of a control deviation between a measured temperature, which is a measured temperature of the internal combustion engine, and a target temperature requested by a host device, the flow-rate control device comprising:
a first determination part configured to determine whether or not a load amount of the internal combustion engine is in a high-load state that is greater than or equal to a predetermined first threshold;
a second determination part configured to determine whether or not the target temperature reaches a high-load temperature that is a target temperature requested when the internal combustion engine is in the high-load state; and
a first correction part configured to lower the target temperature at a predetermined first drop rate when the first determination part determines that the internal combustion engine is in the high-load state, and to set the target temperature to the high-load temperature when the second determination part determines that the target temperature reaches the high-load temperature.

2. The flow-rate control device according to claim 1, further comprising:
a third determination part configured to determine whether or not the load amount of the internal combustion engine is in a steady-load state that is smaller than a predetermined second threshold after the target temperature is set to the high-load temperature by the first correction part;
a fourth determination part configured to determine whether or not the target temperature reaches a steady-load temperature that is a target temperature requested when the internal combustion engine is in the steady state; and
a second correction part configured to raise the target temperature at a predetermined first rise rate when the third determination part determines that the internal combustion engine is in the steady-load state, and to set the target temperature to the target temperature requested by the host device when the fourth determination part determines that the target temperature reaches the steady-load temperature.

3. The flow-rate control device according to claim 1 or 2, further comprising a fifth determination part configured to determine whether or not the target temperature lowered at the first drop rate by the first correction part is lower than or equal to a first temperature set to be higher than the high-load temperature as much as a predetermined amount,
wherein the first correction part lowers the target temperature at a second drop rate that is smaller than the first drop rate when the fifth determination part determines that the target temperature is lower than or equal to the first temperature, and
the first determination part determines whether or not the target temperature lowered at the second drop rate reaches the high-load temperature.

4. The flow-rate control device according to claim 3, further comprising a sixth determination part configured to determine whether or not the target temperature raised at the first rise rate by the second correction part is higher than or equal to a second temperature set to be lower than the steady-load temperature as much as a predetermined amount,
wherein the second correction part raises the target temperature at a second rise rate smaller than the first rise rate when the sixth determination part determines that the target temperature is higher than or equal to the second temperature, and
the fourth determination part determines whether or not the target temperature raised at the second rise rate reaches the steady-load temperature.

5. The flow-rate control device according to any one of claims 2 to 4, further comprising:
a steady-load control part configured to control the flow rate using a predetermined first control rule;
a temperature rise control part configured to control the flow rate using a second control rule that is different from the first control rule;
a temperature drop control part configured to control the flow rate using a third control rule that is different from the first control rule and second control rule; and
a selection part configured to select the flow rate controlled by the temperature rise control part as a flow rate to be output to a slave device when the first determination part determines that the internal combustion engine is in the high-load state, to select the flow rate controlled by the temperature drop control part as the flow rate to be output to the slave device when the third determination part determines that the internal combustion engine is in the steady-load state, and to select the flow rate controlled by the steady-load control part as the flow rate to be output to the open device when the fourth determination part determines that the target temperature reaches the steady-load temperature.

6. A flow-rate control method of controlling a flow rate of a coolant, which cools an internal combustion engine, on the basis of a control deviation between a measured temperature, which is a measured temperature of the internal combustion engine, and a target temperature requested by a host device, the flow-rate control method being performed by a computer and comprising:
determining whether or not a load amount of the internal combustion engine is in a high-load state that is greater than or equal to a predetermined first threshold;
determining whether or not the target temperature reaches a high-load temperature that is a target temperature requested when the internal combustion engine is in the high-load state; and
lowering the target temperature at a predetermined first drop rate when it is determined that the internal combustion engine is in the high-load state, and setting the target temperature to the high-load temperature when it is determined that the target temperature reaches the high-load temperature.

7. The flow-rate control method according to claim 6, further comprising:
determining whether or not the load amount of the internal combustion engine is in a steady-load state that is smaller than a predetermined second threshold after the target temperature is set to the high-load temperature;
determining whether or not the target temperature reaches a steady-load temperature that is a target temperature requested when the internal combustion engine is in the steady state; and
raising the target temperature at a predetermined first rise rate when it is determined that the internal combustion engine is in the steady-load state, and setting the target temperature to the target temperature requested by the host device when it is determined that the target temperature reaches the steady-load temperature.
